# EUROPEAN PATENT SPECIFICATION

(11) **EP 1 074 760 B1**
(45) Date of publication and mention of the grant of the patent: **03.11.2004**
(21) Application number: 00116722.0
(22) Date of filing: 02.08.2000
(51) Int. Cl.: F16F 9/36, F16J 15/32

(54) **Sealing assembly for a mechanical member moving reciprocatingly with respect to a relative slide seat, and in particular for a shock absorber rod**
Dichtungsanordnung für ein mechanisches Element dass sich hin- und her bewegt, relativ zu einem Führungssitz, insbesondere für Stossdämpferstange
Système d'étanchéite pour un élément mécanique qui se déplace avec un mouvement va-et-vient relatif à un siège glissière, en particulier pour une tige d'amortisseur

(30) Priority: 04.08.1999 IT MI991761
(43) Date of publication of application: 07.02.2001
(73) Proprietor: RFT S.p.A., 10121 Torino (IT)
(72) Inventor: Bortolan, Adriano, 10100 Torino (IT)
(74) Representative: Franzolin, Luigi

(56) References cited:
- DE-A- 2 122 966
- DE-A- 19 831 523
- DE-U- 8 630 327
- GB-A- 1 541 264
- PATENT ABSTRACTS OF JAPAN vol. 2000, no. 06, 22 September 2000 (2000-09-22) & JP 2000 081148 A (KAYABA IND CO LTD), 21 March 2000 (2000-03-21)

## Description

The present invention relates to a sealing assembly for a mechanical member moving reciprocatingly with respect to a relative slide seat, and in particular for a shock absorber rod.

As is known, sealing must be provided between a vehicle shock absorber rod and the relative seat to prevent lubricant leakage and to safeguard the shock absorber from external contaminants. Sealing assemblies for shock absorber rods are known in which a rigid ring, typically made of metal, supports a sealing ring made of elastomeric material and having at least one sealing lip projecting from a radially inner peripheral edge of the rigid ring and cooperating radially with the rod as this moves back and forth. More specifically, sealing assemblies are known in which the sealing ring comprises two sealing lips (each with one or two contact points) extending axially on opposite sides, and the sealing function of which is assured by a predetermined amount of interference at assembly and/or by a spring. A major drawback of this type of sealing assembly lies in the severe stress to which the sealing lips are subjected, and which is further aggravated by the wide range of temperatures in which the lips are called upon to operate. Precisely on account of the particular working conditions of the sealing ring in this particular application, various types of elastomeric materials have been experimented. Recently, for example, fluorinated rubber has been proposed, which remains efficient within a wide range of (even relatively low) temperatures, but has a relatively low resistance to repeated stress, especially if used for making sealing elements of the type described above, in which the sealing lips project from the rigid supporting ring.

It is therefore an object of the present invention to provide a sealing assembly for a mechanical member moving with respect to a relative seat, e.g. for a shock absorber rod, designed to eliminate the aforementioned drawbacks typically associated with known sealing assemblies. In particular, it is an object of the invention to provide a sealing assembly which is efficient, is cheap and easy to produce, and provides for effective long-term performance. It is a further object of the invention to provide a sealing assembly designed to ensure particularly favourable in-service stress conditions of the sealing ring, so that the sealing ring may be made of elastomeric materials suitable for low-temperature use, such as fluorinated rubber.

According to the present invention, there is provided a sealing assembly for a mechanical member moving reciprocatingly with respect to a relative slide seat, and in particular for a shock absorber rod; the sealing assembly comprising a rigid ring, and a sealing ring made of elastomeric material and carried by a peripheral edge of said rigid ring; said sealing ring in turn comprising at least a first radial sealing portion projecting axially from said peripheral edge of said rigid ring; and the sealing assembly being characterized in that said rigid ring comprises an annular supporting element for supporting said first sealing portion; said annular supporting element being formed integrally in one piece with said rigid ring, and projecting from said rigid ring in a substantially axial direction and parallel to said first sealing portion, so as to rest, in use, against said first sealing portion in a radial direction.

In a preferred embodiment, the sealing ring comprises a recessed annular chamber interposed radially between said first sealing portion and said annular supporting element, and also comprises a root portion fixed integrally to said peripheral edge of the rigid ring; said first sealing portion projecting axially from said root portion, and having a free end facing and a predetermined radial distance from said annular supporting element, and separated from the annular supporting element by said annular chamber; said root portion defining a virtual hinge enabling elastic deformation of said first sealing portion so that said first sealing portion is brought to rest against said annular supporting element.

The sealing assembly according to the invention is therefore efficient, is cheap and easy to produce, and ensures particularly favourable in-service stress conditions of the sealing ring, which may therefore be made of elastomeric materials, such as fluorinated rubber, which, though having a relatively low resistance to repeated stress, have other desirable characteristics, such as resistance to low temperature. The particular design of the sealing assembly according to the invention, in fact, ensures optimum in-service stress conditions of the sealing ring, reduces stress, and increases the range of elastomeric materials which can be used.

A non-limiting embodiment of the present invention will be described by way of example with reference to the accompanying drawings, in which:
Figure 1 shows a schematic radial section of a sealing assembly for a shock absorber rod in accordance with the invention;
Figure 2 shows an experimental drawing illustrating schematically the in-service stress status of the Figure 1 sealing assembly;
Figure 3 shows a possible variation of the Figure 1 sealing assembly.

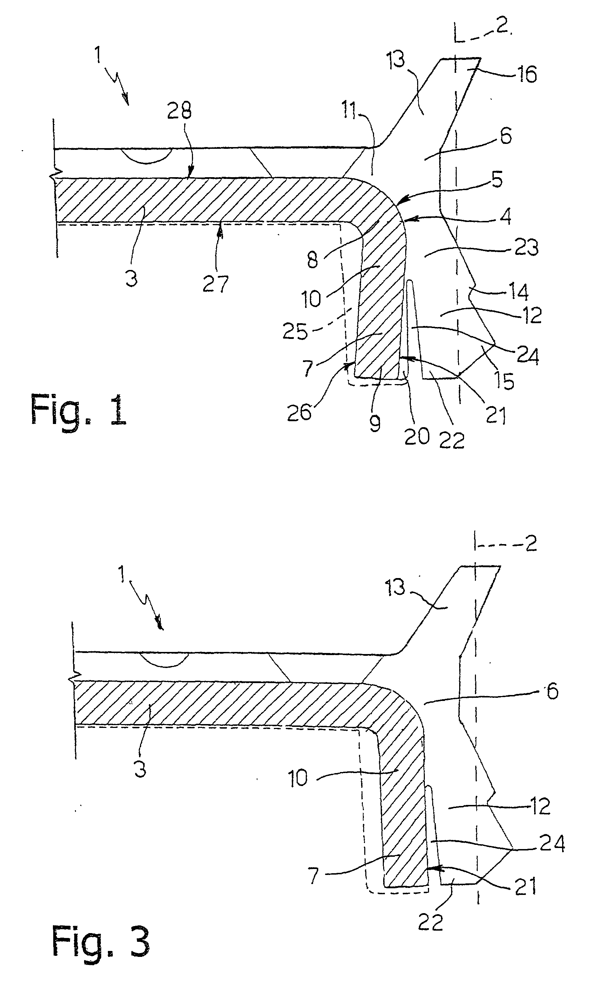

Number 1 in Figure 1 indicates as a whole a sealing assembly for a rod 2 of a known shock absorber not shown for the sake of simplicity. Rod 2 is also known and shown only schematically by the dash line in Figure 1. Sealing assembly 1 comprises a rigid ring 3, which is fitted integrally, in known manner not shown for the sake of simplicity, to a cylinder of the shock absorber. In the example shown, rigid ring 3 is a circular disk made of sheet metal, and has a central through hole 4 defined by a radially inner peripheral edge 5.

A sealing ring 6, made of elastomeric material, e.g. a fluorinated elastomeric polymer such as FKM™, projects radially inside central hole 4 from peripheral edge 5, and, as is known, cooperates, in use, in sliding manner with rod 2, which is inserted through hole 4 and, in use, moves back and forth in a straight line inside hole 4.

According to the invention, rigid ring 3 comprises a substantially cylindrical collar 7 formed integrally in one piece with rigid ring 3 and projecting axially from peripheral edge 5. In the preferred, non-limiting embodiment shown in Figure 1, collar 7 is substantially truncated-cone-shaped, and increases in diameter from an end 8, connected to peripheral edge 5, towards a free end 9, so that a lateral wall 10 of collar 7 slopes at a predetermined angle with respect to a central axis of symmetry of rigid ring 3. Collar 7, which may, for example, be formed by bending the sheet metal from which rigid ring 3 is made, defines an annular supporting element for supporting sealing ring 6, as explained in detail later on.

Sealing ring 6 comprises a root portion 11 fixed integrally (in known manner) to peripheral edge 5 of rigid ring 3, and from which extend a first and a second sealing portion 12, 13. More specifically, sealing portions 12, 13 extend radially beyond peripheral edge 5 of rigid ring 3, and axially, on opposite sides to each other, in a direction substantially parallel to collar 7. Sealing portion 12 is a multicontact type with two sealing lips 14, 15; while sealing portion 13 has only one sealing lip 16.

In the non-limiting example shown in Figure 1, sealing ring 6 extends with a cover portion 20 to cover a radially inner lateral surface 21 of collar 7; opposite an end 23 connected to root portion 11, sealing portion 12 has a free end 22 facing and a predetermined radial distance from end 9 of collar 7, and separated from end 9 by a recessed annular chamber 24; and annular chamber 24 is defined, in the example shown, by a circumferential groove formed in sealing ring 6, is interposed radially between sealing portion 12 and collar 7, has two facing diverging sides, and is open towards free end 22 of sealing portion 12. Root portion 11 thus defines a virtual hinge enabling elastic deformation of sealing portion 12 so that sealing portion 12 is brought to rest against radially inner lateral surface 21 of collar 7.

As shown by the dash line in Figure 1, sealing ring 6 may also comprise a further cover portion 25 covering a radially outer lateral surface 26 of collar 7. Optional cover portion 25 may also be connected directly integral with cover portion 20, and may also extend to cover, even only partly, a face 27 of rigid ring 3 facing collar 7. Sealing ring 6 may also extend to cover, at least partly, a face 28 of rigid ring 3 opposite face 27 and therefore facing away from collar 7.

In actual use, when rod 2 is inserted inside central hole 4, sealing ring 6 - on account of the radial interference produced at assembly and shown in Figure 1 (in which sealing ring 6 is shown undeformed) - is deformed elastically to ensure sliding contact between sealing lips 14, 15, 16 and rod 2. More specifically, sealing portion 12, flexing about portion 23 connected to root portion 11 and by virtue of annular chamber 24, comes to rest against collar 7, which thus provides for radially supporting and for ensuring controlled elastic deformation of sealing portion 12.

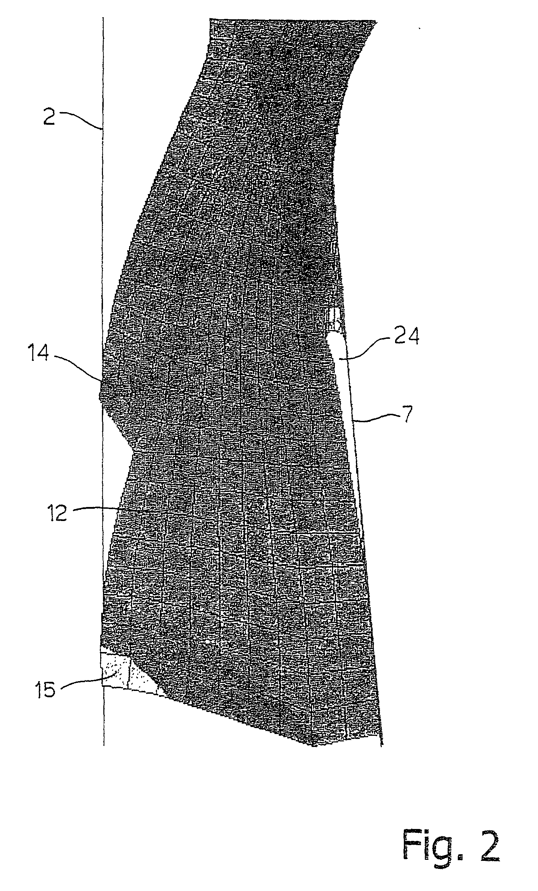

The operating condition of sealing portion 12 is shown schematically in Figure 2, in which any details similar to or identical with those already described are indicated using the same numbering system, and which also shows the stress status of sealing portion 12. As can be seen, the in-service stress status of sealing portion 12 is excellent in terms of stress distribution : in Figure 2, in fact, the regions of sealing portion 12 subjected to the same stress value are indicated by the same colour; and the stress values recorded are also significantly lower than those of similar known solutions.

Figure 3, in which any details similar to or identical with those already described are indicated using the same numbering system, shows a possible variation of sealing assembly 1 according to the invention, in which lateral wall 10 of collar 7 is substantially perpendicular with respect to the central axis of symmetry of rigid ring 3 and parallel to rod 2, so that collar 7 is in the form of a right cylinder coaxial and concentric with rod 2. Recessed annular chamber 24 enabling controlled elastic deformation of sealing portion 12 is defined by a radial gap between sealing portion 12 and radially inner lateral surface 21 of collar 7, and surface 21 need not be covered by cover portion 20 described previously. In this case, too, annular chamber 24 is open towards free end 22 of sealing portion 12, and is again defined by two facing diverging sides, one of which, however, is defined by radially inner lateral wall 21 of collar 7, and the other by a lateral surface of sealing portion 12.

Clearly, further changes may be made to the sealing assembly as described and illustrated herein without, however, departing from the scope of the present invention.

## Claims

1. A sealing assembly (1) for a mechanical member (2) moving reciprocatingly with respect to a relative slide seat, and in particular for a shock absorber rod; the sealing assembly comprising a rigid ring (3), and a sealing ring (6) made of elastomeric material and carried by a peripheral edge (5) of said rigid ring (3); said sealing ring (6) in turn comprising at least a first radial sealing portion (12) projecting axially from said peripheral edge (5) of said rigid ring (3); and the sealing assembly being **characterized in that** said rigid ring (3) comprises an annular supporting element (7) for supporting said first sealing portion (12); said annular supporting element (7) being formed integrally in one piece with said rigid ring (3), and projecting from said rigid ring (3) in a substantially axial direction and parallel to said first sealing portion (12), so as to rest, in use, against said first sealing portion (12) in a radial direction.

2. A sealing assembly as claimed in Claim 1, **characterized in that** said sealing ring comprises a recessed annular chamber (24) interposed radially between said first sealing portion (12) and said annular supporting element (7).

3. A sealing assembly as claimed in Claim 2, **characterized in that** said sealing ring (6) comprises a root portion (11) fixed integrally to said peripheral edge (5) of the rigid ring (3); said first sealing portion (12) projecting axially from said root portion (11), and having a free end (22) facing and a predetermined radial distance from said annular supporting element (7), and separated from the annular supporting element by said annular chamber (24); said root portion (11) defining a virtual hinge enabling elastic deformation of said first sealing portion (12) so that said first sealing portion (12) is brought to rest against said annular supporting element (7).

4. A sealing assembly as claimed in Claim 3, **characterized in that** said annular chamber (24) comprises two facing diverging sides, and is open towards said free end (22) of said first sealing portion (12).

5. A sealing assembly as claimed in one of Claims 2 to 4, **characterized in that** said annular supporting element comprises a substantially cylindrical collar (7) projecting in a substantially axially direction from said peripheral edge (5) of the rigid ring (3).

6. A sealing assembly as claimed in Claim 5, **characterized in that** a lateral wall (10) of said collar (7) slopes at a predetermined angle with respect to a central axis of symmetry of said rigid ring (3); said collar (7) being substantially truncated-cone-shaped.

7. A sealing assembly as claimed in Claim 5, **characterized in that** a lateral wall (10) of said collar (7) is substantially perpendicular with respect to a central axis of symmetry of said rigid ring (3); said collar (7) being in the form of a right cylinder.

8. A sealing assembly as claimed in Claim 6 or 7, **characterized in that** said sealing ring (6) comprises a first cover portion (20) covering a radially inner lateral surface (21) of said collar (7); said annular chamber (24) being defined by a circumferential groove formed between said first cover portion (20) and said first sealing portion (12).

9. A sealing assembly as claimed in one of Claims 6 to 8, **characterized in that** said sealing ring (6) comprises a second cover portion (25) covering a radially outer lateral surface (26) of said collar (7).

10. A sealing assembly as claimed in Claim 9, **characterized in that** said second cover portion (25) extends to also cover, at least partly, a first face (27) of said rigid ring (3) facing said collar (7).

11. A sealing assembly as claimed in one of the foregoing Claims, **characterized in that** said sealing ring (6) comprises a second sealing portion (13) extending axially on the opposite side to said first sealing portion (12), and radially beyond said peripheral edge (5) of the rigid ring (3); said sealing ring (6) extending to also cover, at least partly, a second face (28) of said rigid ring (3) opposite said collar (7); and said first sealing portion (12) in turn comprising a first and a second sealing lip (14, 15).

12. A sealing assembly as claimed in any one of the foregoing Claims, **characterized in that** said rigid ring (3) is made of sheet metal bent, at said peripheral edge (5), to form said annular supporting element (7); said sealing ring (6) being made of a fluorinated elastomeric polymer.

## Patentansprüche

1. Dichtungsanordnung (1) für ein mechanisches Element (2), das sich bezüglich eines Führungssitzes hin- und herbewegt, und besonders für eine Stoßdämpferstange, wobei die Dichtungsanordnung einen starren Ring (3) und einen aus elastomerem Material hergestellten und von einem peripheren Rand (5) des starren Rings (3) getragenen Dichtungsring (6) umfasst, der seinerseits mindestens einen ersten radialen Dichtungsabschnitt (12) umfasst, der axial vom peripheren Rand (5) des starren Rings (3) absteht, **dadurch gekennzeichnet, dass** der starre Ring (3) ein ringförmiges Stützelement (7) zum Stützen des ersten Dichtungsabschnitts (12) umfasst, wobei das ringförmige Stützelement (7) integral einstückig mit dem starren Ring (3) ausgebildet ist und so von dem starren Ring (3) in einer im Wesentlichen axialen Richtung und parallel zum ersten Dichtungsabschnitt (12) absteht, dass es im Gebrauch in radialer Richtung am ersten Dichtungsabschnitt (12) anliegt.

2. Dichtungsanordnung nach Anspruch 1, **dadurch gekennzeichnet, dass** der Dichtungsring eine radial zwischen dem ersten Dichtungsabschnitt (12) und dem ringförmigen Stützelement (7) liegende ausgesparte ringförmige Kammer (24) umfasst.

3. Dichtungsanordnung nach Anspruch 2, **dadurch gekennzeichnet, dass** der Dichtungsring (6) einen Wurzelabschnitt (11) umfasst, der integral am peripheren Rand (5) des starren Rings (3) befestigt ist, wobei der erste Dichtungsabschnitt (12) axial von dem Wurzelabschnitt (11) absteht und ein freies Ende (22) hat, das dem ringförmigen Stützelement (7) gegenüberliegt, einen vorbestimmten radialen Abstand zu diesem einnimmt und durch die ringförmige Kammer (24) von diesem getrennt ist, wobei der Wurzelabschnitt (11) ein virtuelles Scharnier definiert, das die elastische Deformation des ersten Dichtungsabschnitts (12) gestattet, so dass der erste Dichtungsabschnitt (12) an das ringförmige Stützelement (7) angelegt wird.

4. Dichtungsanordnung nach Anspruch 3, **dadurch gekennzeichnet, dass** die ringförmige Kammer (24) zwei sich gegenüberliegende divergierende Seiten umfasst und zum freien Ende (22) des ersten Dichtungsabschnitts (12) hin offen ist.

5. Dichtungsanordnung nach einem der Ansprüche 2 bis 4, **dadurch gekennzeichnet, dass** das ringförmige Stützelement einen im Wesentlichen zylindrischen Bund (7) umfasst, der in einer im Wesentlichen axialen Richtung vom peripheren Rand (5) des starren Rings (3) vorsteht.

6. Dichtungsanordnung nach Anspruch 5, **dadurch gekennzeichnet, dass** eine Seitenwand (10) des Bunds (7) in einem vorbestimmten Winkel bezüglich einer mittleren Symmetrieachse des starren Rings (3) abfällt, wobei der Bund (7) im Wesentlichen kegelstumpfförmig ist.

7. Dichtungsanordnung nach Anspruch 5, **dadurch gekennzeichnet, dass** eine Seitenwand (10) des Bunds (7) im Wesentlichen senkrecht zu einer mittleren Symmetrieachse des starren Rings (3) steht, wobei der Bund (7) die Form eines geraden Zylinders hat.

8. Dichtungsanordnung nach Anspruch 6 oder 7, **dadurch gekennzeichnet, dass** der Dichtungsring (6) einen ersten Abdeckungsabschnitt (20) umfasst, der eine radial innere Seitenfläche (21) des Bunds (7) abdeckt, wobei die ringförmige Kammer (24) von einer zwischen dem ersten Abdeckungsabschnitt (20) und dem ersten Dichtungsabschnitt (12) ausgebildeten Umfangsnut definiert ist.

9. Dichtungsanordnung nach einem der Ansprüche 6 bis 8, **dadurch gekennzeichnet, dass** der Dichtungsring (6) einen zweiten Abdeckungsabschnitt (25) umfasst, der eine radial äußere Seitenfläche (26) des Bunds (7) abdeckt.

10. Dichtungsanordnung nach Anspruch 9, **dadurch gekennzeichnet, dass** sich der zweite Abdeckungsabschnitt (25) so weit erstreckt, dass er auch mindestens teilweise eine erste Fläche (27) des dem Bund (7) gegenüberliegenden starren Rings (3) abdeckt.

11. Dichtungsanordnung nach einem der vorhergehenden Ansprüche, **dadurch gekennzeichnet, dass** der Dichtungsring (6) einen zweiten Dichtungsabschnitt (13) umfasst, der sich axial auf der gegenüberliegenden Seite zum ersten Dichtungsabschnitt (12) und radial über den peripheren Rand (5) des starren Rings (3) hinaus erstreckt, wobei sich der Dichtungsring (6) so weit erstreckt, dass er auch mindestens teilweise eine zweite Fläche (28) des starren Rings (3) gegenüber dem Bund (7) abdeckt, und wobei der erste Dichtungsabschnitt (12) seinerseits eine erste und eine zweite Dichtungslippe (14, 15) umfasst.

12. Dichtungsanordnung nach einem der vorhergehenden Ansprüche, **dadurch gekennzeichnet, dass** der starre Ring (3) aus Blech hergestellt ist, das am peripheren Rand (5) so gebogen ist, dass es das ringförmige Stützelement (7) bildet, wobei der Dichtungsring (6) aus einem fluorierten elastomeren Polymer hergestellt ist.

## Revendications

1. Système d'étanchéité (1) pour un élément mécanique (2) se déplaçant avec un mouvement de va-et-vient par rapport à un siège glissière relatif, et en particulier pour une barre d'amortissement ou d'absorption de chocs ; le système d'étanchéité comprenant un anneau rigide (3), et un anneau d'étanchéité (6) fabriqué dans un matériau élastomère et porté par un bord périphérique (5) dudit anneau rigide (3) ; ledit anneau d'étanchéité (6) comprenant à son tour au moins une première partie d'étanchéité radiale (12) faisant saillie ou s'étendant dans le sens axial depuis ledit bord périphérique (5) dudit anneau rigide (3) ; et le système d'étanchéité étant **caractérisé en ce que** ledit anneau rigide (3) comprend un élément de support annulaire (7) destiné à supporter ladite première partie d'étanchéité (12) ; ledit élément de support annulaire (7) étant formé d'un seul tenant en une seule pièce avec ledit anneau rigide (3), et faisant saillie ou s'étendant depuis ledit anneau rigide (3) dans une direction sensiblement axiale et parallèle à ladite première partie d'étanchéité (12), de manière à reposer, à l'usage, contre ladite première partie d'étanchéité (12) dans une direction radiale.

2. Système d'étanchéité selon la revendication 1, **caractérisé en ce que** ledit anneau d'étanchéité comprend une chambre annulaire évidée (24) interposée dans le sens radial entre ladite première partie d'étanchéité (12) et ledit élément de support annulaire (7).

3. Système d'étanchéité selon la revendication 2, **caractérisé en ce que** ledit anneau d'étanchéité (6) comprend une partie principale ou inférieure (11) fixée d'un seul tenant audit bord périphérique (5) de l'anneau rigide (3) ; ladite première partie d'étanchéité (12) se projetant dans le sens axial depuis ladite partie inférieure (11), et présentant une extrémité libre (22) faisant face et une distance radiale prédéterminée depuis ledit élément de support annulaire (7), et séparée de l'élément de support annulaire par ladite chambre annulaire (24) ; ladite partie inférieure (11) définissant une articulation virtuelle permettant une déformation élastique de ladite première partie d'étanchéité (12), de sorte que ladite première partie d'étanchéité (12) soit amenée à reposer contre ledit élément de support annulaire (7).

4. Système d'étanchéité selon la revendication 3, **caractérisé en ce que** ladite chambre annulaire (24) comprend deux côtés divergents se faisant face, et est ouvert en direction de ladite extrémité libre (22) de ladite première partie d'étanchéité (12).

5. Système d'étanchéité selon l'une des revendications 2 à 4, **caractérisé en ce que** ledit élément de support annulaire comprend un collier cylindrique sensiblement annulaire (7) se projetant dans une direction sensiblement axiale depuis ledit bord périphérique (5) de l'anneau rigide (3).

6. Système d'étanchéité selon la revendication 5, **caractérisé en ce qu'**une paroi latérale (10) dudit collier (7) est inclinée selon un angle prédéterminé par rapport à un axe central de symétrie dudit anneau rigide (3) ; ledit collier (7) présentant sensiblement une forme tronconique.

7. Système d'étanchéité selon la revendication 5, **caractérisé en ce qu'**une paroi latérale (10) dudit collier (7) est sensiblement perpendiculaire à un axe central de symétrie dudit anneau rigide (3), ledit collier (7) présentant la forme d'un cylindre droit.

8. Système d'étanchéité selon la revendication 6 ou 7, **caractérisé en ce que** ledit anneau d'étanchéité (6) comprend une première partie de couvercle (20) recouvrant une surface latérale radialement interne (21) dudit collier (7) ; ladite chambre annulaire (24) étant définie par une rainure circonférentielle formée entre ladite première partie de couvercle (20) et ladite première partie d'étanchéité (12).

9. Système d'étanchéité selon l'une quelconque des revendications 6 à 8, **caractérisé en ce que** ledit anneau d'étanchéité (6) comprend une seconde partie de couvercle (25) recouvrant une surface latérale radialement externe (26) dudit collier (7).

10. Système d'étanchéité selon la revendication 9, **caractérisé en ce que** ladite seconde partie de couvercle (25) s'étend pour recouvrir également, au moins en partie, une première face (27) dudit anneau rigide (3) faisant face audit collier (7).

11. Système d'étanchéité selon l'une des revendications précédentes, **caractérisé en ce que** ledit anneau d'étanchéité (6) comprend une seconde partie d'étanchéité (13) s'étendant dans le sens axial sur le côté opposé à ladite première partie d'étanchéité (12), et radialement au-delà dudit bord périphérique (5) de l'anneau rigide (3) ; ledit anneau d'étanchéité (6) s'étendant pour recouvrir également, au moins en partie, une seconde face (28) dudit anneau rigide (3) opposée audit collier (7) ; et ladite première partie d'étanchéité (12) comprenant à son tour une première et une seconde lèvres d'étanchéité (14, 15).

12. Système d'étanchéité selon l'une quelconque des revendications précédentes, **caractérisé en ce que** ledit anneau rigide (3) est fabriqué en tôle pliée, au niveau dudit bord périphérique (5), pour former ledit élément de support annulaire (7) ; ledit anneau d'étanchéité (6) étant fabriqué en polymère élastomère fluoré.
